# EUROPÄISCHE PATENTSCHRIFT

(11) **EP 3 707 109 B1**
(45) Veröffentlichungstag und Bekanntmachung des Hinweises auf die Patenterteilung: **27.01.2021**
(21) Anmeldenummer: 18800588.8
(22) Anmeldetag: 07.11.2018
(51) Int. Cl.: C04B 28/02, C04B 40/00, C08L 31/02, C04B 24/26, C04B 111/27

(54) **HYDROPHOBE, IN WASSER REDISPERGIERBARE POLYMERPULVER-ZUSAMMENSETZUNG**
HYDROPHOBIC POLYMER POWDER COMPOSITION THAT CAN BE REDISPERSED IN WATER
COMPOSITION PULVÉRULENTE POLYMÈRE HYDROPHOBE, REDISPERSIBLE DANS L'EAU

(43) Veröffentlichungstag der Anmeldung: 16.09.2020
(73) Patentinhaber: Wacker Chemie AG, 81737 München (DE)
(72) Erfinder: WEITZEL, Hans-Peter, 84571 Reischach (DE); DIETRICH, Ulf, 84489 Burghausen (DE)
(74) Vertreter: Ege, Markus
(86) Internationale Anmeldenummer: PCT/EP2018/080511
(87) Internationale Veröffentlichungsnummer: WO 2020/094228

(56) Entgegenhaltungen:
- EP-A1- 1 394 198
- WO-A1-2004/103928
- US-A1- 2014 272 402
- US-A1- 2015 057 405

## Beschreibung

Die Erfindung betrifft eine hydrophobe, in Wasser redispergierbare Polymerpulver-Zusammensetzung, deren Verwendung als hydrophobierendes Additiv und damit hydrophob modifizierte Trockenmörtel-Formulierungen.

Als in Wasser redispergierbare Polymerpulver-Zusammensetzungen (Dispersionspulver) bezeichnet man Pulverzusammensetzungen, welche mittels Trocknung der entsprechenden wässrigen Dispersionen der Basispolymerisate in Gegenwart von Schutzkolloiden (Trocknungshilfe) zugänglich werden. Aufgrund dieses Herstellungsprozesses wird das feinteilige Harz der Dispersion mit einem wasserlöslichen Schutzkolloid ausreichender Menge umhüllt. Bei der Trocknung wirkt das Schutzkolloid wie ein Mantel, welcher das Zusammenkleben der Teilchen verhindert. Beim Redispergieren in Wasser löst sich das Schutzkolloid wieder in Wasser und es liegt eine wässrige Dispersion der ursprünglichen Polymerteilchen vor (Schulze J. in TIZ, No. 9, 1985).

Solche Dispersionspulver auf der Basis von Homo- oder Copolymerisaten von ethylenisch ungesättigten Monomeren werden im Baubereich als Bindemittel, gegebenenfalls in Kombination mit hydraulisch abbindenden Bindemitteln wie Zement, eingesetzt. Beispielsweise dienen diese in Bauklebern, Putzen, Mörteln und Farben der Verbesserung der mechanischen Festigkeit und der Haftung. Bei mit mineralischen Bindemitteln gebundenen Baustoffen wie Putzen, Spachtelmassen und Bauklebern besteht zudem die Notwendigkeit diese vor Witterungseinflüssen zu schützen. Bei Regen oder Schnee werden die Baustoffe, beispielsweise der Außenputz, bedingt durch deren Kapillaraktivität durchfeuchtet, was zu irreversiblen Schäden an der Bausubstanz führen kann. Um dies zu verhindern ist es schon lange gängige Praxis, die Baustoffe zu hydrophobieren.

In der WO 95/20627 A1 werden Dispersionspulver mit einem Anteil an in Wasser dispergierbaren Siliciumverbindungen, beispielsweise Silane, als hydrophobierende Bindemittel für bauchemische Produkte empfohlen. Die WO 02/31036 A1 beschreibt Dispersionspulver-Zusammensetzungen, welche Fettsäureester als hydrophobierende Komponente enthalten. Aus der EP 1 394 198 A1 sind hydrophob modifizierte, in Wasser redispergierbare Polymerpulver bekannt, welche als hydrophobe Komponente eine Kombination aus Organosiliciumverbindung und einer Fettsäureverbindung enthalten. Die hydrophoben Komponenten werden der entsprechenden Polymerdispersion vor deren Trocknung zugemischt. Die WO 2006/061139 A1 beschreibt hydrophobierende, in Wasser redispergierbare Polymerpulver auf Basis eines Polymerisats von 50 bis 90 Gew.-% Vinylacetat, 5 bis 50 Gew.-% alpha-verzweigtem Vinylester und 1 bis 30 Gew.-% (Meth)acrylsäureester, welche gegebenenfalls noch Organosiliciumverbindungen oder Fettsäuren bzw. deren Derivate enthalten können. Ein hydrophobierendes, in Wasser redispergierbares Additiv, welches mittels Sprühtrocknung einer wässrigen Zusammensetzung von Fettsäuren oder deren Derivaten in Gegenwart von Polyvinylalkohol als Trocknungshilfe erhalten wird, ist in der WO 2004/103928 A1 beschrieben.

Bei den bisher bekannten Alternativen zur Hydrophobierung von Mörtelmassen erfolgte diese mittels Fettsäuren oder Fettsäurederivaten und/oder Silanen als Bestandteile einer in Wasser redispergierbaren Polymerpulverzusammensetzung. Damit wird die Effizienz der hydrophobierenden Komponente durch die maximal mögliche Beladung des Dispersionspulvers mit diesem Additiv beschränkt. Die zuletzt genannten, mit Polyvinylalkohol als Trocknungshilfe erhaltenen, Hydrophobierungsmittel haben in der Mörtelzusammensetzung keinen Bindemittelcharakter.

Der Erfindung lag daher die Aufgabe zugrunde, ein hydrophobierend wirkendes Additiv zur Verfügung zu stellen, welches in Mörtelzusammensetzungen als Bindemittel wirkt und die mechanische Festigkeit der ausgehärteten Mörtelmassen verbessert.

Gegenstand der Erfindung ist eine hydrophobe, in Wasser redispergierbare Polymerpulver-Zusammensetzung enthaltend
a) ein Basispolymerisat mit
   a1) mehr als 60 Gew.-Teilen Vinyllaurat-Monomereinheiten
   a2) 5 bis 30 Gew.- Teilen Vinylacetat-Monomereinheiten,
   a3) 5 bis 30 Gew.- Teilen Ethylen-Monomereinheiten,
   a4) 0 bis 10 Gew.- Teilen weiterer Hilfsmonomereinheiten, wobei sich die Angaben in Gew.- Teile jeweils auf 100 Gew.-Teile aufaddieren,
b) 0,5 bis 30 Gew.-% ein oder mehrere Schutzkolloide,
c) 0 bis 30 Gew.-% Antiblockmittel,
d) 0 bis 20 Gew.-% Organosiliciumverbindung,
e) 0 bis 20 Gew.-% Fettsäure oder Derivate der Fettsäuren,
wobei die Angaben in Gew.-% auf das Gesamtgewicht des Polymerisats a) bezogen sind.

Vorzugsweise werden a1) 65 bis 90 Gew.-Teile, besonders bevorzugt 70 bis 90 Gew.-Teile Vinyllaurat, jeweils bezogen auf 100 Gew.-Teile Polymerisat copolymerisiert.

Vorzugsweise werden a2) 10 bis 30 Gew.-Teile, besonders bevorzugt 10 bis 20 Gew.-Teile Vinylacetat, jeweils bezogen auf 100 Gew.-Teile Polymerisat copolymerisiert.

Vorzugsweise werden a3) 5 bis 20 Gew.-Teile, besonders bevorzugt 5 bis 15 Gew.-Teile Ethylen, jeweils bezogen auf 100 Gew.-Teile Polymerisat copolymerisiert.

Gegebenenfalls können noch a4) bis zu 10 Gew.-Teile, vorzugsweise 0,05 bis 10 Gew.-Teile, jeweils bezogen auf 100 Gew.-Teile Polymerisat, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Geeignete Hilfsmonomere sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane wie Methacryloxypropyltrimethoxysilan, Vinyltrialkoxysilane und Vinylmethyldialkoxysilane wie Vinyltrimethoxysilan oder Vinyltriethoxysilan oder Vinylmethyldimethoxysilan, wobei als Alkoxygruppen beispielsweise Methoxy-, Ethoxy- und Ethoxypropylenglykolether-Reste enthalten sein können.

Am meisten bevorzugt werden Polymerisate a) mit a1) 65 bis 90 Gew.-Teilen Vinyllaurat-Monomereinheiten, a2) 5 bis 30 Gew.-Teilen Vinylacetat-Monomereinheiten, und a3) 5 bis 20 Gew.-Teilen Ethylen-Monomereinheiten, welche gegebenenfalls noch a4) bis zu 10 Gew.-Teilen Hilfsmonomereinheiten enthalten, wobei sich die Angaben in Gew.- Teile jeweils auf 100 Gew.-Teile aufaddieren.

Die Monomerauswahl bzw. die Auswahl der Gewichtsanteile der Comonomere erfolgt dabei so, dass im Allgemeinen eine Glasübergangstemperatur Tg von -60°C bis -20°C, vorzugsweise -50°C bis -40°C, resultiert. Die Glasübergangstemperatur Tg der Polymerisate kann in bekannter Weise mittels DSC (Dynamische Differenz-Thermoanalyse, DIN EN ISO 11357-1/2), beispielsweise mit dem dynamischen Differenzkalorimeter DSC1 der Firma Mettler-Toledo im offenen Tiegel bei einer Heizrate von 10 K/min bestimmt werden. Als Glasübergangstemperatur wird im Wärmeflussdiagramm die Temperatur am Mittelpunkt der Stufe (Mittelpunkt = halbe Stufenhöhe der Stufe des Wärmeflusses) der zweiten Aufheizkurve ausgewertet. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Geeignete Schutzkolloide b) sind teilverseifte und vollverseifte Polyvinylalkohole; Polyvinylpyrrolidone; Polyvinylacetale; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Bevorzugt werden teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 95 Mol-% und einer Höpplerviskosität, in 4 %-iger wässriger Lösung, von 1 bis 30 mPas, vorzugsweise 3 bis 15 mPas (Methode nach Höppler bei 20°C, DIN 53015). Der Hydrolysegrad wird gemäß DIN 53401 mittels Verseifung der Restacetatgruppen mit NaOH und Rücktitration der überschüssigen NaOH mit HCl bestimmt.

Bevorzugt sind auch teilverseifte oder vollverseifte, hydrophob modifizierte Polyvinylalkohole mit einem Hydrolysegrad von 80 bis 100 Mol-% und einer Höpplerviskosität, in 4 %-iger wässriger Lösung, von 1 bis 30 mPas, vorzugsweise 3 bis 15 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, alpha-Olefine mit 2 bis 12 C-Atomen wie Ethylen oder Propylen. Der Anteil der hydrophoben Einheiten beträgt vorzugsweise 0,1 bis 10 Gew.-%, bezogen auf das Gesamtgewicht des teil- oder vollverseiften Polyvinylalkohols. Besonders bevorzugt sind teilverseifte oder vollverseifte Copolymerisate von Vinylacetat mit Isopropenylacetat mit einem Hydrolysegrad von 95 bis 100 Mol-%. Es können auch Gemische der genannten Polyvinylalkohole eingesetzt werden.

Am meisten bevorzugt werden teilverseifte Polyvinylalkohole mit einem Hydrolysegrad von 85 bis 94 Mol-% und einer Höpplerviskosität, in 4 %-iger wässriger Lösung, von 3 bis 15 mPas (Methode nach Höppler bei 20 °C, DIN 53015).

Die genannten Schutzkolloide b) sind mittels dem Fachmann bekannter Verfahren zugänglich und auch im Handel erhältlich.

Geeignete Antiblockmittel c) sind Calciumcarbonat, Magnesiumcarbonat, Talk, Gips, gemahlene Tone, Kaoline wie Metakaolin sowie feingemahlene Aluminiumsilikate, Kieselgur, kolloidales Silikagel, pyrogen erzeugtes Siliciumdioxid, jeweils mit Teilchengrößen vorzugsweise im Bereich von 10 nm bis 10 µm.

Die hydrophobe, in Wasser redispergierbare Polymerpulver-Zusammensetzung kann gegebenenfalls noch jeweils bis zu 20 Gew.-% herkömmliche Hydrophobierungsmittel wie d) Organosiliciumverbindungen und/oder e) Fettsäuren oder deren Derivate enthalten.

Als Hydrophobierungsmittel geeignete Organosiliciumverbindungen d) oder Fettsäuren und deren Derivate e) sind dem Fachmann bekannt und in der WO 2006/061139 A1 ausführlich beschrieben. Häufig verwendete Organosiliciumverbindungen d) sind beispielsweise Alkylalkoxysilane wie Isooctyltriethoxysilan, n-Octyltriethoxysilan, Hexadecyltriethoxysilan. Häufig verwendete Fettsäuren und deren Derivate e) sind beispielsweise Palmitinsäure (n-Hexadecansäure), Stearinsäure (n-Octadecansäure) sowie Ölsäure (9-Dodecensäure), und die C₁- bis C₁₄-Alkylester und Alkylarylester der Laurinsäure und der Ölsäure, Mono- und Diglykolester der Laurinsäure und der Ölsäure, sowie die Mono-, Di- und Tri-Fettsäureester des Glycerins mit der Laurinsäure und der Ölsäure.

Bevorzugt werden hydrophobe, in Wasser redispergierbare Polymerpulver-Zusammensetzungen, welche keine d) Organosiliciumverbindungen und keine e) Fettsäuren oder deren Derivate enthalten.

Die Herstellung der hydrophoben, in Wasser redispergierbaren Polymerpulver-Zusammensetzung erfolgt in an sich bekannter Art und Weise mittels radikalisch initiierter Emulsionspolymerisation in wässrigem Medium, und anschließender Trocknung der damit erhaltenen wässrigen Polymerdispersion. Die Emulsionspolymerisation wird in Gegenwart von Schutzkolloid b) und/oder Emulgator durchgeführt. Vorzugsweise wird ausschließlich mit Schutzkolloid b) stabilisiert. Die damit erhältlichen wässrigen Polymerdispersionen haben im Allgemeinen einen Festgehalt von 25 bis 70 Gew.-%, vorzugsweise von 45 bis 65 Gew.-%.

Die Trocknung kann beispielsweise mittels Wirbelschichttrocknung, Dünnschichttrocknung (Walzentrocknung), Gefriertrocknung oder Sprühtrocknung erfolgen. Vorzugsweise wird sprühgetrocknet. Die Sprühtrocknung erfolgt im Allgemeinen nach Zugabe von weiterem Schutzkolloid b) als Verdüsungshilfe. Soll das Polymerpulver noch Organosiliciumverbindung d) und/oder Fettsäure (derivate) e) enthalten, werden diese vorzugsweise der Polymerdispersion vor deren Trocknung zugegeben. Die Zugabe des Antiblockmittels c) erfolgt vorzugsweise solange das Pulver noch im Trocknungsgas suspendiert ist. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45 °C bis 120 °C, bevorzugt 60 °C bis 90 °C, je nach Anlage, Tg des Harzes und gewünschtem Trocknungsgrad, gewählt.

Die hydrophobe, in Wasser redispergierbare Polymerpulver-Zusammensetzung kann in vielfältigen Anwendungsbereichen eingesetzt werden. Beispielsweise in Trockenmörtel-Zusammensetzungen für die Herstellung von Bauklebern, insbesondere Fliesenkleber und Vollwärmeschutzkleber, Putzen, Spachtelmassen, Fußbodenspachtelmassen, Verlaufsmassen, Dichtschlämmen, Fugenmörtel, Skimcoats und Farben.

Im Allgemeinen wird die hydrophobe, in Wasser redispergierbare Polymerpulver-Zusammensetzung in einer Menge von 1 bis 20 Gew.-%, bezogen auf das Gesamtgewicht der zu hydrophobierenden Rezeptur (Trockenmörtel ohne Wasseranteil), eingesetzt.

Die hydrophobe, in Wasser redispergierbare Polymerpulver-Zusammensetzung kann auch im Gemisch mit einem weiteren Dispersionspulver eingesetzt werden. Die Einsatzmenge hängt auch davon ab, ob das Dispersionspulver zusammen mit mineralischen Bindemitteln oder als alleiniges Bindemittel eingesetzt wird.

Besonders vorteilhaft ist der Einsatz des hydrophobierenden Redispersionspulvers, aufgrund der hervorragenden Hydrophobie und der gleichzeitig hohen Haftung auf Polystyrol, in Bauklebern und Beschichtungen für Wärmedämmverbundsysteme (WDVS). Besonders vorteilhaft ist auch der Einsatz in Skimcoat-Rezepturen, das sind dünne Oberputze oder Glättspachtelauftragungen mit jeweils einer Dicke von im Allgemeinen 1 bis 2 mm. Hier wurden bisher Copolymerisate mit Vinylchlorid-Anteil eingesetzt, beispielsweise VCE-Copolymerpulver aus der EP 1 763 553 B1. Mit der vorliegenden Erfindung wird in dieser Anwendung eine chlorfreie Alternative erhältlich.

Im Allgemeinen enthalten Trockenmörtel
i) 0 bis 50 Gew.-% ein oder mehrere mineralische Bindemittel,
ii) 1 bis 20 Gew.-% ein oder mehrere Dispersionspulver,
iii) 40 bis 90 Gew.-% ein oder mehrere Füllstoffe,
iv) 0.05 bis 0.8 Gew.-% ein oder mehrere Verdickungsmittel,
v) gegebenenfalls bis zu 5 Gew.-% weitere Additive,
wobei die Anteile i) bis v) jeweils auf das Gesamtgewicht des Trockenmörtels bezogen sind und sich auf 100 Gew.-% aufaddieren.

Geeignete mineralische Bindemittel i) sind Zemente wie Portlandzement, Calciumaluminatzement und Calciumsulfoaluminatzement; Calciumsulfate wie Gips, Hemihydrat und Anhydrit; Hüttensand, Puzzolane, Wasserglas und Kalk.

In einer bevorzugten Ausführungsform wird die erfindungsgemäße hydrophobe, in Wasser redispergierbare Polymerpulver-Zusammensetzung als alleiniges Dispersionspulver ii) eingesetzt.

Bevorzugt werden auch Trockenmörtel, welche die erfindungsgemäße hydrophobe, in Wasser redispergierbare Polymerpulver-Zusammensetzung enthalten und zusätzlich noch ein oder mehrere davon verschiedene nicht hydrophobe Dispersionspulver.

Beispiele hierfür sind in Wasser redispergierbare Polymerpulver-Zusammensetzungen auf der Basis von Vinylacetathomopolymer; Vinylacetat-Ethylen-Copolymeren mit 1 bis 40 Gew.-% Ethylen; Vinylacetat-Mischpolymerisaten mit 1 bis 50 Gew.-% von einem oder mehreren weiteren Comonomeren aus der Gruppe der Vinylester mit 1 bis 12 C-Atomen im Carbonsäurerest wie Vinylpropionat, Vinyllaurat, Vinylester von alpha-verzweigten Carbonsäuren mit 5 bis 13 C-Atomen wie VeoVa9^{R}, VeoVa10^{R}, VeoVa11^{R}; Vinylacetat-Mischpolymerisaten mit 1 bis 40 Gew.-% Ethylen und 1 bis 50 Gew.-% von einem oder mehreren weiteren Comonomeren aus der Gruppe der Vinylester mit 1 bis 12 C-Atomen im Carbonsäurerest wie Vinylpropionat, Vinyllaurat, Vinylester von alpha-verzweigten Carbonsäuren mit 5 bis 13 C-Atomen wie VeoVa9^{R}, VeoVa10^{R}, VeoVa11^{R}; Vinylacetat-Mischpolymerisaten mit 1 bis 40 Gew.-% Ethylen und 1 bis 50 Gew.-% (Meth)Acrylsäureester von unverzweigten oder verzweigten Alkoholen mit 1 bis 15 C-Atomen, insbesondere Methylmethacrylat, Methylacrylat, n-Butylacrylat oder 2-Ethylhexylacrylat; Vinylacetat-Mischpolymerisaten mit 1 bis 30 Gew.-% Vinyllaurat oder Vinylester einer alpha-verzweigten Carbonsäure mit 5 bis 13 C-Atomen, sowie 1 bis 30 Gew.-% (Meth)Acrylsäureester von unverzweigten oder verzweigten Alkoholen mit 1 bis 15 C-Atomen, insbesondere Methylmethacrylat, Methylacrylat, n-Butylacrylat oder 2-Ethylhexylacrylat, welche noch 1 bis 40 Gew.-% Ethylen enthalten können; Vinylacetat-Mischpolymerisaten mit 1 bis 40 Gew.-% Ethylen und 1 bis 60 Gew.-% Vinylchlorid.

Weitere Beispiele sind in Wasser redispergierbare Polymerpulver-Zusammensetzungen auf der Basis von Methylmethacrylat-Copolymerisaten mit n-Butylacrylat und/oder 2-Ethylhexylacrylat und gegebenenfalls Ethylen; Styrol-Copolymerisaten mit einem oder mehreren Monomeren aus der Gruppe Methylacrylat, Ethylacrylat, Propylacrylat, n-Butylacrylat, 2-Ethylhexylacrylat; Styrol-Butadien Copolymerisaten.

Geeignete Füllstoffe iii) sind Quarzsande, Dolomit, Talk, Glimmer sowie Leichtfüllstoffe wie Blähglasgranulate und Blähtone. Als Verdickungsmittel iv) werden im Allgemeinen Polysaccharide wie Stärkeether, Celluloseether und modifizierte Celluloseether, und mineralische Schichtsilikate wie Bentonit oder Talkum eingesetzt.

Beispiele für weitere Additive sind Abbindebeschleuniger wie Natriumsulfat oder Calciumformiat; Abbindeverzögerer wie Weinsäure oder Calciumtartrat oder Calciumcitrat; Dispergiermittel wie Polyacrylate; Entschäumer, Luftporenbildner, Naturfasern und Polymerfasern.

Die Herstellung der Trockenmörtelformulierung erfolgt im Allgemeinen so, dass die Komponenten i) bis v) in herkömmlichen Pulvermischvorrichtungen zu einem Trockenmörtel vermischt und homogenisiert werden. Die zur Verarbeitung erforderliche Menge Wasser wird unmittelbar vor der Verarbeitung hinzugefügt. Es kann auch so vorgegangen werden, dass einzelne Komponenten erst nachträglich zu der mit Wasser angerührten Mischung zugegeben werden.

Die nachfolgenden Beispiele dienen der weiteren Erläuterung der Erfindung:

### Beispiel 1:

Herstellung der hydrophoben, in Wasser redispergierbaren Polymerpulver-Zusammensetzung.

In einem Druckreaktor mit einem Volumen von 600 Liter wurden folgende Komponenten vorgelegt:
102,7 kg Wasser,
98 kg einer 20%igen wässrigen Lösung eines teilverseiften Polyvinylalkohols mit einem Hydrolysegrad von 88 Mol-% und einer Höpplerviskosität von 4 mPas (bestimmt nach DIN 53015 bei 20°C in 4 %-iger wässriger Lösung),
250 g Ameisensäure (85%ig in Wasser),
465 g Eisenammoniumsulfatlösung (1%ig in Wasser).

Der Reaktor wurde evakuiert. Anschließend wurden zur Vorlage 23,3 kg Vinylacetat und 116,5 kg Vinyllaurat gegeben. Anschließend wurde der Reaktor auf 55 °C aufgeheizt und mit einem Ethylendruck von 26 bar beaufschlagt (entsprechend einer Menge von 16,5 kg Ethylen).

Die Polymerisation wurde durch Start der Dosierung einer 3%igen wässrigen tert. Butylhydroperoxidlösung und einer 5%igen wässrigen Na-hydroxymethansulfinatlösung (Brüggolit) mit je einer Rate von 1,6 kg/h gestartet. Mit Beginn der Polymerisation wurde die Reaktortemperatur innerhalb von 30 min gleichmäßig auf 75 °C erhöht. Bei Erreichen von 75 °C wurde Ethylen mit einem Druck von 30 bar bis zum Erreichen der gewünschten Gesamtmenge von 24 kg nachdosiert. 30 Minuten nach Polymerisationsbeginn wurde eine Monomermischung, bestehend aus 11,65 kg Vinylacetat und 81,5 kg Vinyllaurat während 2,5 Stunden zudosiert. Eine wässrige Dosierung, bestehend aus 17,5 kg der vorgenannten 20%igen Polyvinylalkohollösung und 21,9 kg Wasser, wurde ebenfalls 30 Minuten nach Reaktionsbeginn mit einer Rate von 15,7 kg/h während einem Zeitraum von 2,5 h dosiert. Die Initiatordosierungen wurden der Reaktion angepasst und innerhalb der 2,5 h kontinuierlich erhöht. Nach Ende der Monomerdosierung und der wässrigen Dosierung liefen die Initiatordosierungen für weitere 90 Minuten mit einer Rate von 3,2 kg/h, um den Ansatz auszupolymerisieren. Die Gesamtpolymerisationszeit betrug 5 Stunden.

Die Dispersion wurde anschließend zur Abtrennung von überschüssigem Ethylen in den Drucklosreaktor, in dem ein Druck von 0,7 mbar angelegt wurde, transferiert und dort durch Zugabe von 1,9 kg einer 10%igen wässrigen t-Butylhydroperoxidlösung und 3,2 kg einer 5%igen wässrigen Na-hydroxymethansulfinatlösung (Brüggolit) nachpolymerisiert. Der pH-Wert wurde durch Zugabe von Natronlauge (10%ige wässrige Lösung) auf 4,0 eingestellt und durch Zugabe von 40 kg Wasser verdünnt. Zuletzt wurde der Ansatz über ein 250 µm Sieb aus dem Drucklosreaktor abgefüllt.

Es wurde eine wässrige Dispersion eines Vinylacetat-Vinyllaurat-Ethylen-Copolymers mit einem Festgehalt von 52 Gew.-% erhalten, wobei das Copolymer aus 14 Gew.-% Vinylacetat-, 78 Gew.-% Vinyllaurat- und 8 Gew.-% Ethylen-Einheiten zusammengesetzt war.

500 g dieser Dispersion wurden mit 640 g einer 11 Gew.-%-igen wässrigen Lösung eines teilverseiften Polyvinylalkohols mit einem Hydrolysegrad von 88 Mol-% und einer Höpplerviskosität von 13 mPas und mit 582 g einer 20 Gew.-%-igen wässrigen Lösung eines teilverseiften Polyvinylalkohols mit einem Hydrolysegrad von 88 Mol-% und einer Höpplerviskosität von 4 mPas (je bestimmt nach DIN 53015 bei 20°C in 4 %-iger wässriger Lösung) abgemischt und bei 25 °C über 2 Stunden homogenisiert.

Die damit resultierende Mischung wurde mit 3 kg Wasser auf eine Viskosität von 80 mPas (Brookfield, 20 UpM, Spindel 1, 23 °C) verdünnt. Anschließend wurde mittels Sprühtrocknung in einem Gleichstromtrockner, mit einer Eintrittstemperatur von 135 °C und einer Austrittstemperatur von 85 °C, getrocknet, unter Zudosierung von 2,5 Gew.-% Kaolin, bezogen auf den Anteil an polymeren Bestandteilen.

Es wurde ein farbloses, gut rieselfähiges Pulver erhalten. Das Pulver wurde mit weiteren 10 Gew.-% Kaolin, bezogen auf den Anteil an polymeren Bestandteilen, abgemischt.

### Prüfrezeptur:

Zur Austestung der hydrophobierenden Wirkung wurde folgende Mörtelrezeptur eingesetzt:

| Bestandteile | Gew.-Teile |
|---|---|
| Weißzement (Dyckerhoff CEM I 52,5 R) | 148,13 |
| Kalk (Walhalla Edelhydrat) | 20,41 |
| Celluloseether (Tylose MH 10007 P4) | 1,60 |
| Calciumcarbonat (Omyacarb 40 GU) | 169,41 |
| Calciumcarbonat (Omyacarb 130 GU) | 163,29 |
| Quarzsand (Quarzwerke HR 81 T) | 497,16 |
| Gesamt: | 1000,00 |
| Wasser | 280,00 |

Als Vergleichssubstanzen zum erfindungsgemäßen Hydrophobierungsadditiv wurden handelsübliche Hydrophobierungsmittel eingesetzt:
Natriumoleat (Ligaphob N 90, Peter Greven GmbH & Co. KG) Silan/Fettsäureester-Gemisch (Silres Powder D, Wacker Chemie AG)

Die hydrophobierende Wirkung wurde in der Prüfrezeptur getestet, jeweils nach Zugabe von 0,2 Gew.-% oder 0,3 Gew.-% Hydrophobierungsmittel, jeweils bezogen auf das Gesamtgewicht des Trockenmörtels. Es wurde auch eine Trockenmörtel-Rezeptur ohne Zugabe von Hydrophobierungsmittel getestet (= Zero Blend).

### Messmethoden:

### Bestimmung der Wasseraufnahme in kg/m²:

Die Wasseraufnahme in kg/m² gibt Aufschluss über die flächenbezogene Wasseraufnahme durch kapillare oder absorptive Kräfte beziehungsweise den Grad der Hydrophobierung.
Die Bestimmung der Wassereindringzahl erfolgte in Anlehnung an DIN 52617 und ETAG 004.
Die Wasseraufnahme in kg/m² wurde durch Eintauchen der Probenoberfläche (Saugfläche) in Wasser aus der Massenzunahme des Prüfkörpers und der Größe der Saugfläche ermittelt.

Der oben beschriebene Mörtel wurde in Anlehnung an DIN 196-1 angemischt und anschließend auf eine vorgewässerte (30 Sekunden unter fließendem Leitungswasser) Gasbetonscheibe (3,5 cm stark, 21 cm Durchmesser) 4 mm dick aufgetragen und anschließend ein Stück Glasgittergewebe mit denselben Abmessungen eingelegt. Danach wurde mit der Traufel noch einmal abgezogen. Der Prüfkörper wurde zum Erhärten im Normklima (23 °C / 50 % relative Luftfeuchtigkeit) gelagert und nach 6 Tagen mit Silikonharz seitlich abgedichtet. Danach wurde der Prüfkörper für 24 Stunden in Leitungswasser eingelegt und anschließend 24 Stunden bei 50 °C getrocknet. Dieser Vorgang wurde noch dreimal wiederholt.

Der Prüfkörper wurde vor dem ersten Eintauchen in das Wasserbad gewogen. Die Wasseraufnahme [kg/m²] errechnete sich aus der Gewichtszunahme, gemessen nach dem letzten Wässerungs- / Trocknungs-Zyklus, dividiert durch die Prüffläche.

Die Ergebnisse sind in Tabelle 1 zusammengefasst.

Bestimmung der kapillaren Wasseraufnahme kg/(m² * min^{0.5}):
Die Bestimmung der kapillaren Wasseraufnahme erfolgte mit der Methode nach DIN EN 1015-18.

Zur Bestimmung der kapillaren Wasseraufnahme wurde analog DIN 196-1 die oben genannte Mörtelmischung hergestellt. Mit der Mörtelmischung wurden in einer Schalungsform Prismen mit der Abmessung von jeweils 40x40x160 mm hergestellt.

Danach wurde 2 Tage in der mit einer Kunststofffolie abgedeckten Schalungsform im Normklima (50 % relative Luftfeuchtigkeit, 23 °C) gelagert.

Anschließend wurde entschalt und die Prüfkörper kamen für weitere 5 Tage luftdicht verpackt in eine Plastiktüte (Lagerung bei 95 % Luftfeuchtigkeit, 20 °C). Danach wurden sie 21 Tage im Normklima (50 % relative Luftfeuchtigkeit, 23 °C) bis zur Massekonstanz gelagert.
Einen Tag vor Ende der insgesamt 28 Tage dauernden Konditionierung, wurden die 4 Längsseiten der Prüfkörper mit einem Abdichtmittel (Silikonharz) eingestrichen und nach der Trocknung der Prüfkörper (in der Regel am nächsten Tag) jeweils in zwei Hälften gebrochen.

Vor dem Eintauchen der Prüfkörper in Wasser wurde jeweils das Ausgangsgewicht (M0) ermittelt.

Die Prüfkörper wurden mit der Bruchfläche der zerbrochenen Prismen nach unten zeigend in eine Schale gelegt, wobei sie durch zwei Leisten in einem Abstand zum Schalenboden gehalten wurden und für die Dauer der Prüfung bis zu einer Tiefe von 5 bis 10 mm in Wasser eingetaucht wurden.

Die Prüfkörper wurden nach einer Eintauchzeit von 10 min aus dem Wasser entnommen. Das Wasser auf der Oberfläche wurde mit einem Tuch (Küchenpapier) abgewischt. Danach wurden die Prüfkörper jeweils gewogen (M1).

Unmittelbar danach wurden die Prüfkörper erneut mit der Bruchfläche nach unten zeigend in die Schale gelegt und nach einer Eintauchzeit von 90 min entnommen und nach Abwischen des Wassers jeweils erneut gewogen (M2).

Der Koeffizient der kapillaren Wasseraufnahme wurde nach folgender Gleichung ermittelt: C = 0,1(M2 - M1) · kg/(m² * min^{0.5}).

Die Ergebnisse sind in Tabelle 1 zusammengefasst.

### Bestimmung der Biegezugfestigkeit und Druckfestigkeit:

Analog DIN 196-1 wurde die oben genannte Mörtelmischung hergestellt. Mit der Mörtelmischung wurden in einer Schalungsform Prismen mit der Abmessung von jeweils 40x40x160 mm hergestellt. Nach einem Tag wurde entschalt und die Prismen wurden 28 Tage im Normklima (23 °C / 50 % relative Luftfeuchtigkeit) gelagert. Anschließend wurde die Biegezugfestigkeit als Dreipunktbiegeversuch gemäß DIN 51902 (Prüfgerät: Toni Prax) mit 500N/s und die Druckfestigkeit gemäß DIN 51910 mit 2460 N/sec bestimmt.

Die Ergebnisse sind in Tabelle 2 zusammengefasst.

**Tabelle 1:**

| Hydrophobierungsmittel | Wassereindringzahl kg/m² 0,2 % Dosierung | Kapillare Wasseraufnahme kg/ (m²*min^{0,5}) 0,3 % Dosierung |
|---|---|---|
| | | |
| Zero Blend | 0,52 | 0,74 |
| Powder D | 0,33 | 0,29 |
| Ligaphob N 90 | 0,25 | 0,24 |
| Beispiel 1 | 0,26 | 0,18 |

**Tabelle 2:**

| Hydrophobierungsmittel | BZF 0,2 % | BZF 0,3 % | DF 0,2 % | DF 0,3 % |
|---|---|---|---|---|
| | | | | |
| Zero Blend | 2,6 | 2,6 | 5,9 | 5,9 |
| Powder D | 2,3 | 2,3 | 5,1 | 4,9 |
| Ligaphob N 90 | 2,0 | 1,8 | 4,3 | 3,9 |
| Beispiel 1 | 2,6 | 2,7 | 6,3 | 6,3 |

| | | | | |
|---|---|---|---|---|
| Biegezugfestigkeit (BZF) in N/mm² bei 0,2 % und 0,3 % Dosierung Druckfestigkeit (DF) in N/mm² bei 0,2 % und 0,3 % Dosierung | | | | |

Die Ergebnisse der Testung zeigen, dass das erfindungsgemäße Hydrophobierungsmittel bezüglich der Hydrophobierung den handelsüblichen Präparaten überlegen ist (Tabelle 1).

Im Unterschied zu den handelsüblichen Präparaten erhält man bei der erfindungsgemäßen Hydrophobierung keine Abnahme der mechanischen Festigkeit. Ganz im Gegenteil, im Vergleich zum Zero Blend erhält man eine Verbesserung der Biegezugfestigkeit und der Druckfestigkeit.

## Patentansprüche

1. Hydrophobe, in Wasser redispergierbare Polymerpulver-Zusammensetzung enthaltend
a) ein Basispolymerisat mit
a1) mehr als 60 Gew.-Teilen Vinyllaurat-Monomereinheiten
a2) 5 bis 30 Gew.- Teilen Vinylacetat-Monomereinheiten,
a3) 5 bis 30 Gew.- Teilen Ethylen-Monomereinheiten,
a4) 0 bis 10 Gew.- Teilen weiterer Hilfsmonomereinheiten, wobei sich die Angaben in Gew.- Teile jeweils auf 100 Gew.-Teile aufaddieren,
b) 0,5 bis 30 Gew.-% ein oder mehrere Schutzkolloide,
c) 0 bis 30 Gew.-% Antiblockmittel,
d) 0 bis 20 Gew.-% Organosiliciumverbindung,
e) 0 bis 20 Gew.-% Fettsäure oder Derivate der Fettsäuren,
wobei die Angaben in Gew.-% auf das Gesamtgewicht des Polymerisats a) bezogen sind.

2. Hydrophobe, in Wasser redispergierbare Polymerpulver-Zusammensetzung nach Anspruch 1, **dadurch gekennzeichnet, dass** das Basispolymerisat a) 65 bis 90 Gew.-Teile Vinyllaurat a1) enthält.

3. Hydrophobe, in Wasser redispergierbare Polymerpulver-Zusammensetzung nach Anspruch 1, **dadurch gekennzeichnet, dass** ein Basispolymerisat a) enthalten ist mit
a1) 65 bis 90 Gew.-Teilen Vinyllaurat-Monomereinheiten,
a2) 5 bis 30 Gew.-Teilen Vinylacetat-Monomereinheiten, und
a3) 5 bis 20 Gew.-Teilen Ethylen-Monomereinheiten, welches gegebenenfalls noch a4) bis zu 10 Gew.-Teilen Hilfsmonomereinheiten enthält.

4. Hydrophobe, in Wasser redispergierbare Polymerpulver-Zusammensetzung nach Anspruch 1 bis 3, **dadurch gekennzeichnet, dass** als Schutzkolloid b) ein oder mehrere teilverseifte Polyvinylalkohole mit einem Hydrolysegrad von 85 bis 94 Mol-% und einer Höpplerviskosität, in 4 %-iger wässriger Lösung, von 3 bis 15 mPas enthalten sind.

5. Verfahren zur Herstellung der hydrophoben, in Wasser redispergierbaren Polymerpulver-Zusammensetzung nach Anspruch 1 bis 4, mittels radikalisch initiierter Emulsionspolymerisation in wässrigem Medium, und anschließender Trocknung der damit erhaltenen wässrigen Polymerdispersion.

6. Verwendung einer hydrophoben, in Wasser redispergierbaren Polymerpulver-Zusammensetzung nach Anspruch 1 bis 4 in Trockenmörtel-Zusammensetzungen.

7. Verwendung einer hydrophoben, in Wasser redispergierbaren Polymerpulver-Zusammensetzung nach Anspruch 1 bis 4 in Trockenmörtel-Zusammensetzungen für die Herstellung von Bauklebern, Putzen, Spachtelmassen, Fußbodenspachtelmassen, Verlaufsmassen, Dichtschlämmen, Fugenmörtel, Skimcoats und Farben.

8. Verwendung einer hydrophoben, in Wasser redispergierbaren Polymerpulver-Zusammensetzung nach Anspruch 1 bis 4 in Bauklebern und Beschichtungen für Wärmedämmverbundsysteme.

9. Verwendung einer hydrophoben, in Wasser redispergierbaren Polymerpulver-Zusammensetzung nach Anspruch 1 bis 4 in Skimcoat-Rezepturen.

10. Trockenmörtel enthaltend
i) 0 bis 50 Gew.-% ein oder mehrere mineralische Bindemittel,
ii) 1 bis 20 Gew.-% ein oder mehrere Dispersionspulver,
iii) 40 bis 90 Gew.-% ein oder mehrere Füllstoffe,
iv) 0.05 bis 0.8 Gew.-% ein oder mehrere Verdickungsmittel,
v) gegebenenfalls bis zu 5 Gew.-% weitere Additive, **dadurch gekennzeichnet, dass** als Dispersionspulver ii) eine hydrophobe, in Wasser redispergierbare Polymerpulver-Zusammensetzung nach Anspruch 1 bis 4 enthalten ist.

11. Trockenmörtel nach Anspruch 10, **dadurch gekennzeichnet, dass** als Dispersionspulver ii) eine hydrophobe, in Wasser redispergierbare Polymerpulver-Zusammensetzung nach Anspruch 1 bis 4 enthalten ist und zusätzlich noch ein oder mehrere davon verschiedene nicht hydrophobe Dispersionspulver.

## Claims

1. Hydrophobic, water-redispersible polymer powder composition comprising
a) a main polymer having
a1) more than 60 parts by weight of vinyl laurate monomer units
a2) 5 to 30 parts by weight of vinyl acetate monomer units,
a3) 5 to 30 parts by weight of ethylene monomer units,
a4) 0 to 10 parts by weight of other ancillary monomer units,
where the data in parts by weight always give a total of 100 parts by weight,
b) 0.5 to 30% by weight of one or more protective colloids,
c) 0 to 30% by weight of antiblocking agent,
d) 0 to 20% by weight of organosilicon compound,
e) 0 to 20% by weight of fatty acid or derivatives of the fatty acids,
where the data in % by weight are based on the total weight of the polymer a).

2. Hydrophobic, water-redispersible polymer powder composition according to Claim 1, **characterized in that** the main polymer a) comprises 65 to 90 parts by weight of vinyl laurate a1).

3. Hydrophobic, water-redispersible polymer powder composition according to Claim 1, **characterized in that** a main polymer a) is present and has
a1) 65 to 90 parts by weight of vinyl laurate monomer units,
a2) 5 to 30 parts by weight of vinyl acetate monomer units, and
a3) 5 to 20 parts by weight of ethylene monomer units, and it optionally also comprises a4) up to 10 parts by weight of ancillary monomer units.

4. Hydrophobic, water-redispersible polymer powder composition according to any of Claims 1 to 3, **characterized in that** protective colloid b) present comprises one or more partially hydrolyzed polyvinyl alcohols whose degree of hydrolysis is 85 to 94 mol% and whose Höppler viscosity in 4% aqueous solution is 3 to 15 mPas.

5. Process for the production of the hydrophobic, water-redispersible polymer powder composition according to any of Claims 1 to 4 by means of free-radical-initiated emulsion polymerization in an aqueous medium, followed by drying of the resultant aqueous polymer dispersion.

6. Use of a hydrophobic, water-redispersible polymer powder composition according to any of Claims 1 to 4 in dry mortar compositions.

7. Use of a hydrophobic, water-redispersible polymer powder composition according to any of Claims 1 to 4 in dry mortar compositions for the production of construction adhesives, renders, troweling compositions, floor-filling compositions, leveling compositions, sealing slurries, jointing mortars, skimcoats and paints.

8. Use of a hydrophobic, water-redispersible polymer powder composition according to any of Claims 1 to 4 in construction adhesives and coatings for composite thermal insulation systems.

9. Use of a hydrophobic, water-redispersible polymer powder composition according to any of Claims 1 to 4 in skimcoat formulations.

10. Dry mortar comprising
i) 0 to 50% by weight of one or more mineral binders,
ii) 1 to 20% by weight of one or more dispersion powders,
iii) 40 to 90% by weight of one or more fillers,
iv) 0.05 to 0.8% by weight of one or more thickeners,
v) optionally up to 5% by weight of other additives, **characterized in that** dispersion powders ii) present comprise a hydrophobic, water-redispersible polymer powder composition according to any of Claims 1 to 4.

11. Dry mortar according to Claim 10, **characterized in that** dispersion powders ii) present comprise a hydrophobic, water-redispersible polymer powder composition according to any of Claims 1 to 4 and also additionally one or more non-hydrophobic dispersion powders differing therefrom.

## Revendications

1. Composition de poudre de polymère hydrophobe, redispersible dans l'eau contenant
a) un polymérisat de base comportant
a1) plus de 60 parties en poids de motifs monomériques de type laurate de vinyle
a2) 5 à 30 parties en poids de motifs monomériques de type acétate de vinyle,
a3) 5 à 30 parties en poids de motifs monomériques de type éthylène,
a4) 0 à 10 parties en poids de motifs monomériques auxiliaires supplémentaires,
la somme des données en parties en poids faisant à chaque fois au total 100 parties en poids,
b) 0,5 à 30 % en poids d'un ou plusieurs colloïdes protecteurs,
c) 0 à 30 % en poids d'agent antiadhésif,
d) 0 à 20 % en poids d'un composé de type organosilicium,
e) 0 à 20 % en poids d'un acide gras ou de dérivés d'acides gras,
les données en % en poids se rapportant au poids total du polymérisat a).

2. Composition de poudre de polymère hydrophobe, redispersible dans l'eau selon la revendication 1, **caractérisée en ce que** le polymérisat de base a) contient 65 à 90 parties en poids de laurate de vinyle a1).

3. Composition de poudre de polymère hydrophobe, redispersible dans l'eau selon la revendication 1, **caractérisée en ce qu'**un polymérisat de base a) est contenu avec
a1) 65 à 90 parties en poids de motifs monomériques de type laurate de vinyle,
a2) 5 à 30 parties en poids de motifs monomériques de type acétate de vinyle, et
a3) 5 à 20 parties en poids de motifs monomériques de type éthylène, lequel contient éventuellement encore a4) jusqu'à 10 parties en poids de motifs monomériques auxiliaires.

4. Composition de poudre de polymère hydrophobe, redispersible dans l'eau selon les revendications 1 à 3, **caractérisée en ce qu'**en tant que colloïde protecteur b), un ou plusieurs poly(alcools vinyliques) partiellement saponifiés comportant un degré d'hydrolyse de 85 à 94 % en moles et une viscosité Höppler, dans une solution aqueuse à 4 %, de 3 à 15 mPas, sont contenus.

5. Procédé pour la préparation de la composition de poudre de polymère hydrophobe, redispersible dans l'eau selon les revendications 1 à 4, au moyen d'une polymérisation en émulsion initiée de manière radicalaire en milieu aqueux, et de séchage consécutif de la dispersion aqueuse de polymère ainsi obtenue.

6. Utilisation d'une composition de poudre de polymère hydrophobe, redispersible dans l'eau selon les revendications 1 à 4 dans des compositions de mortier sec.

7. Utilisation d'une composition de poudre de polymère hydrophobe, redispersible dans l'eau selon les revendications 1 à 4 dans des compositions de mortier sec pour la préparation d'adhésifs pour la construction, d'enduits, de mastics, d'enduits de ragréage de sol, de masses d'étalement, de suspensions d'étanchéité, de mortiers pour joints, de couches de liaison et de peintures.

8. Utilisation d'une composition de poudre de polymère hydrophobe, redispersible dans l'eau selon les revendications 1 à 4 dans des adhésifs pour la construction et des revêtements pour des systèmes composites d'isolation thermique.

9. Utilisation d'une composition de poudre de polymère hydrophobe, redispersible dans l'eau selon les revendications 1 à 4 dans des formulations de couches de liaison.

10. Mortier sec contenant
i) 0 à 50 % en poids d'un ou plusieurs liants minéraux,
ii) 1 à 20 % en poids d'une ou plusieurs poudres de dispersion,
iii) 40 à 90 % en poids d'une ou plusieurs charges,
iv) 0,05 à 0,8 % en poids d'un ou plusieurs épaississants,
v) éventuellement jusqu'à 5 % en poids d'additifs supplémentaires,
**caractérisé en ce qu'**en tant que poudre de dispersion ii), une composition de poudre de polymère hydrophobe, redispersible dans l'eau selon les revendications 1 à 4 est contenue.

11. Mortier sec selon la revendication 10, **caractérisé en ce qu'**en tant que poudre de dispersion ii), une composition de poudre de polymère hydrophobe, redispersible dans l'eau selon les revendications 1 à 4, et de plus encore une ou plusieurs poudres de dispersion non hydrophobes différentes de celle-ci, sont contenues.
